# EUROPÄISCHE PATENTSCHRIFT

(11) **EP 3 661 035 B1**
(45) Veröffentlichungstag und Bekanntmachung des Hinweises auf die Patenterteilung: **30.09.2026**
(21) Anmeldenummer: 18208530.8
(22) Anmeldetag: 27.11.2018
(51) Int. Cl.: H02K 55/02, H01F 6/00, H01F 6/04

(54) **SUPRALEITENDE ELEKTRISCHE MASCHINE**
SUPERCONDUCTIVE ELECTRIC MACHINE
MACHINE ÉLECTRIQUE SUPRACONDUCTRICE

(43) Veröffentlichungstag der Anmeldung: 03.06.2020
(73) Patentinhaber: Oswald Elektromotoren Gmbh, 63897 Miltenberg (DE)
(72) Erfinder: CLIMENTE ALARCON, Vicente, 46005 Valencia (ES); GLOWACKI, Bartlomiej Andrzej, Cambridge CB23 7AX (GB); REIS, Thomas, 73924 Kleinheubach (DE); OSWALD, Johannes, 63897 Miltenberg (DE)
(74) Vertreter: Habermann Intellectual Property Partnerschaft von Patentanwälten mbB

(56) Entgegenhaltungen:
- EP-A1- 0 805 545
- EP-A2- 2 299 567
- EP-B1- 0 805 545
- WO-A1-2016/164649
- CN-B- 102 969 873
- DE-A1- 102016 203 341
- JP-A- 2014 180 177
- KR-B1- 101 386 760
- US-A- 4 885 494
- Z. HONG ET AL: "A Compact Superconducting Motor with Novel Stator Windings for Vehicle Applications", JOURNAL OF SUPERCONDUCTIVITY AND NOVEL MAGNETISM ; INCORPORATINGNOVEL MAGNETISM KLUWER ACADEMIC PUBLISHERS-PLENUM PUBLISHERS, NE, vol. 23, no. 3, 5 November 2009 (2009-11-05), pages 381 - 389, XP019792090, ISSN: 1557-1947, [retrieved on 20091105], DOI: 10.1007/S10948-009-0588-0

## Beschreibung

Die Erfindung betrifft eine elektrische Maschine mit einem permanenterregten Rotor und einem koaxial zu dem Rotor ausgerichteten Stator.

Derartige elektrische Maschinen, bei denen der Rotor relativ zu einem feststehenden Stator eine Drehbewegung ausführt, werden in unterschiedlichsten Ausführungsformen in einer Vielzahl von Anwendungsgebieten sowohl als Motoren als auch als Generatoren eingesetzt. Beispielsweise ist es bekannt, derartige elektrische Maschinen mit Drehstrom zu betreiben und als Asynchron- oder Synchronmaschine auszuführen.

Aus dem Stand der Technik sind zudem elektrische Maschinen bekannt, bei denen Wicklungen von Statorspulen des Stators aus einem supraleitenden Material hergestellt sind und durch eine entsprechende Kühleinrichtung bis unter eine materialabhängige Sprungtemperatur des supraleitenden Materials abgekühlt werden können. Durch die Verwendung supraleitender Materialien für die Statorwicklungen treten nur geringe Energieverluste bei dem Betrieb der supraleitenden elektrischen Maschine auf, so dass kleinere und leichtere elektrische Maschinen bei gleichbleibender Leistungsdichte hergestellt werden können. Eine derartige elektrische Maschine wird beispielsweise in der Druckschrift EP 2 786 472 B1 beschrieben.

Zudem sind aus den Druckschriften US 4 885 494 A, KR 101 386 760 B1, EP 0 805 545 A1 und JP 2014 180177 A elektrische Maschinen bekannt, bei denen Wicklungen von Statorspulen des Stators aus einem supraleitenden Material hergestellt sind und durch eine entsprechende Kühleinrichtung bis unter eine materialabhängige Sprungtemperatur des supraleitenden Materials abgekühlt werden können. Das Dokument EP 2 299 567 A2 ottenbart eine elektrische Maschine, die supraleitende Rotorpermanentmagnete aufweist.

Als Aufgabe der Erfindung wird es angesehen, die aus dem Stand der Technik bekannten elektrischen Maschinen derart weiterzuentwickeln, dass eine weitere Gewichtsreduktion bei gleichbleibender Leistung erreicht wird.

Diese Aufgabe wird erfindungsgemäß durch eine elektrische Maschine mit einem permanenterregten Rotor und einem koaxial zu dem Rotor ausgerichteten Stator gelöst, wobei der Rotor mehrere längs eines Rotorumfangs benachbart zueinander angeordnete supraleitende Rotorpermanentmagnete aufweist, wobei die Rotorpermanentmagnete mit einer Kühleinrichtung der elektrischen Maschine in Wirkverbindung stehen, durch die die Rotorpermanentmagnete unter eine Sprungtemperatur abkühlbar sind, wobei jeweils mindestens ein Rotorpermanentmagnet eine Rotorpermanentmagnetanordnung bildet, wobei jede Rotorpermanentmagnetanordnung einen in Richtung des Stators ausgerichteten Rotorpol bildet, und wobei Rotorpole benachbart angeordneter Rotorpermanentmagnetanordnungen jeweils einen magnetischen Dipol bilden.

Supraleiter mit starken Haftzentren bieten die Möglichkeit, ein auf den Supraleiter wirkendes äußeres Magnetfeld zu speichern, solange die Sprungtemperatur des Supraleiters nicht überschritten wird. Derartige supraleitende Permanentmagnete halten ein Magnetfeld auch dann aufrecht, wenn das äußere Magnetfeld entfernt bzw. abgeschaltet wurde. Supraleitende Permanentmagnete bieten gegenüber Normalmagnetenden den Vorteil, dass von supraleitenden Permanentmagneten deutlich stärkere Magnetfelder bereitgestellt werden können. So können durch Hochtemperatursupraleiter bereits bei einer Kühlung auf 77 Kelvin Felder von etwa einem Tesla bereitgestellt werden und bei einer Kühlung auf 29 Kelvin Felder mit einer Feldstärke von etwa 17 Tesla. Die Wirkungsweise supraleitender Permanentmagnete wird beispielsweise in Buckel/Kleiner: Supraleitung - Grundlagen und Anwendung, 7. Auflage, 2013, Wiley-VCH, Weinheim beschrieben.

Durch die Verwendung der supraleitenden Permanentmagnete als Rotorpermanentmagnete können daher deutlich größere Flussdichten im Vergleich zu herkömmlichen und mit Normalmagneten bestückten Rotoren in einem Luftspalt zwischen dem Rotor und dem Stator der elektrischen Maschine bereitgestellt werden, wodurch auf die üblicherweise erforderlichen flussführenden und -konzentrierenden Eisenelemente ganz oder teilweise verzichtet werden kann. Hierdurch kann das Gewicht der elektrischen Maschine weiter deutlich verringert und die Leistungsdichte erhöht werden.

Der Stator der elektrischen Maschine weist vorteilhafterweise Statorspulen auf, die Wicklungen aus einem supraleitenden Material aufweisen. Durch den Aufbau der elektrischen Maschine mit supraleitenden Wicklungen und supraleitenden Permanentmagneten kann eine besonders hohe Leistungsdichte insbesondere hinsichtlich des Gewichts der elektrischen Maschine erreicht werden.

Um die in dem Luftspalt bereitgestellte Flussdichte weiter zu erhöhen, ist erfindungsgemäß vorgesehen, dass eine Querschnittsfläche der Rotorpermanentmagnetanordnung senkrecht zu einer Rotorachse des Rotors bandförmig ausgestaltet ist und dass zwei beabstandet zueinander angeordnete Endbereiche der Rotorpermanentmagnetanordnung einen ersten Abstand zu dem Stator aufweisen und einen zwischen den beiden Endpunkten angeordneter Zwischenbereich einen zweiten Abstand zu dem Stator aufweist. Die bandförmige Rotorpermanentmagnetanordnung ist also derart ausgestaltet an dem Rotor angeordnet, dass sich ein zu dem Luftspalt zwischen dem Rotor und dem Stator schräger Verlauf der Rotorpermanentmagnetanordnung zwischen den Endbereichen und dem Zwischenbereich ergibt. Dabei sind die Endbereiche der Rotorpermanentmagnetanordnung näher zu dem Luftspalt angeordnet als der Zwischenbereich.

In dem Verlauf von jeweils einem der Endbereiche zu dem Zwischenbereich weist die Rotorpermanentmagnetanordnung unterschiedliche Abstände zu dem Luftspalt auf, wobei eine dem Luftspalt zugewandte Außenfläche der bzw. des in diesem Bereich angeordneten Rotorpermanentmagneten der Rotorpermanentmagnetanordnung einen stetigen oder auch sprunghaften Verlauf aufweisen kann. Durch den schrägen Verlauf der Rotorpermanentmagnetanordnung kann das von dem oder den Rotorpermanentmagneten bereitgestellte und aus der dem Luftspalt zugewandten Außenfläche des oder der Rotorpermanentmagneten austretende magnetische Feld in dem Luftspalt auf einen kleinen Bereich konzentriert werden, so dass die Flussdichte in dem Luftspalt weiter erhöht werden kann. Die durch die Konzentration der Flussdichte erreichte Vergrößerung der Flussdichte in einem Abschnitt des Luftspalts hängt insbesondere von dem Verhältnis einer Länge eines Außenflächenabschnitts der Außenfläche eines den magnetischen Fluss in diesem Abschnitt bereitstellenden Rotorpermanentmagnetabschnitts und einer Länge einer Projektion des Außenflächenabschnitts auf eine Umfangslinie einer an den Luftspalt grenzenden Rotoraußenfläche in radialer Richtung ab.

Zur Erzeugung einer symmetrischen Feldverteilung in dem Luftspalt ist erfindungsgemäß vorgesehen, dass die Rotorpermanentmagnetanordnungen jeweils achssymmetrisch aufgebaut sind. Um ein symmetrisches Feld zu erzeugen, werden bei derart schräg verlaufend ausgestalteten Rotorpermanentmagnetanordnungen die Rotorpermanentmagnete vorteilhafterweise derart ausgestaltet, angeordnet und zueinander ausgerichtet, dass die Rotorpermanentmagnete zwei längs einer radial verlaufenden Spiegelachse spiegelbildlich angeordnete Rotorpermanentmagnetanordnungshälften bilden. Die Rotorpermanentmagnetanordnungshälften weisen in den beabstandet zueinander angeordneten Endbereichen der Rotorpermanentmagnetanordnungshälften einen ersten Abstand zu dem Stator aufweisen und der Zwischenbereich einen zweiten Abstand zu dem Stator aufweist. Dabei ist der erste Abstand vorteilhafterweise kleiner als der zweite Abstand.

Vorteilhafterweise ist erfindungsgemäß vorgesehen, dass jede Rotorpermanentmagnetanordnung zwei Rotorpermanentmagnete aufweist. Durch die Verwendung bandförmiger Supraleiter können die Rotorpermanentmagnetanordnungen einfach aus zwei Rotorpermanentmagneten hergestellt werden. Es ist jedoch auch möglich und erfindungsgemäß vorgesehen, dass die Rotorpermanentmagnetanordnungen aus mehreren, nebeneinander angeordneten Rotorpermanentmagneten aufgebaut sind.

Bei einer besonders vorteilhaften Ausgestaltung der erfindungsgemäßen elektrischen Maschine ist vorgesehen, dass ein erster Rotorpermanentmagnet der Rotorpermanentmagnetanordnung von dem Zwischenbereich aus zu einem ersten Endbereich verläuft und dass ein zweiter Rotorpermanentmagnet der Rotorpermanentmagnetanordnung von dem Zwischenbereich aus zu einem zweiten Endbereich verläuft. Die beiden Rotorpermanentmagnete sind dabei vorteilhafterweise spiegelbildlich ausgestaltet und zueinander angeordnet, sodass jeweils ein Rotorpermanentmagnet eine Rotorpermanentmagnetanordnungshälfte bildet. Es ist aber auch möglich und erfindungsgemäß vorgesehen, dass eine erste Rotorpermanentmagnetanordnungshälfte und eine zweite Rotorpermanentmagnetanordnungshälfte jeweils durch mehrere benachbart zueinander angeordnete Rotorpermanentmagnete gebildet werden.

Erfindungsgemäß ist vorteilhafterweise vorgesehen, dass ein von dem jeweiligen Rotorpermanentmagneten erzeugter magnetischer Fluss Rotorpermanentmagnetaußenflächen des Rotorpermanentmagneten in einer Normalenrichtung der Rotorpermanentmagnetaußenflächen durchtritt. Bei Verwendung schräg verlaufender Rotorpermanentmagneten bzw. Rotorpermanentmagnetanordnungen ist eine Rotorpermanentmagnetaußenfläche vorteilhafterweise dem Luftspalt zugewandt, während die dieser Rotorpermanentmagnetaußenfläche gegenüberliegende Rotorpermanentmagnetaußenfläche dem Luftspalt abgewandt ausgerichtet ist. Dadurch, dass in den Rotorpermanentmagneten das Magnetfeld derart gespeichert ist, dass der magnetische Fluss die Rotorpermanentmagnetaußenflächen in der Normalenrichtung durchtritt, kann eine Luftspaltflussverteilung durch eine geeignete Formgebung der Rotorpermanentmagnetaußenflächen einfach vorgegeben werden.

Um die Flussverteilung in dem Luftspalt anzupassen, ist erfindungsgemäß vorgesehen, dass Tangenten in mindestens zwei Punkten einer zwischen einem der Endbereiche und dem Zwischenbereich verlaufenden Außenseite des Querschnitts der Rotorpermanentmagnetanordnung unterschiedliche Steigungen aufweisen. Durch eine derartige Ausgestaltung der Rotorpermanentmagnetaußenflächen wird die Flussdichte in dem Luftspalt in Abhängigkeit der Steigung der Außenseite konzentriert. Umso größer die Steigung der Außenseite gewählt wird, umso stärker wird das von den in diesem Bereich angeordneten Rotorpermanentmagneten oder das von dem in diesem Bereich angeordneten Abschnitts eines Rotorpermanentmagneten erzeugte magnetische Feld in dem Luftspalt konzentriert.

Um einen stetigen Verlauf der Flussfeldverteilung in dem Luftspalt zu erreichen, ist erfindungsgemäß vorgesehen, dass die Außenseite eine sich stetig ändernde Krümmung aufweist. Auf diese Weise kann erfindungsgemäß unter anderem ein sinusförmiger Verlauf der Flussfeldverteilung in dem Luftspalt erreicht werden.

Damit sich die von den beiden Rotorpermanentmagneten bzw. der beiden Rotorpermanentmagnetanordnungshälften bereitgestellten magnetischen Felder in dem Zwischenbereich möglichst nicht beeinflussen, ist erfindungsgemäß vorgesehen, dass in dem Zwischenbereich angeordnete Rotorpermanentmagnete oder Rotorpermanentmagnetabschnitte beabstandet zueinander angeordnet sind. Bei einem symmetrischen Aufbau der Rotorpermanentmagnetanordnungen ist vorteilhafterweise vorgesehen, dass die erste Rotorpermanentmagnetanordnungshälfte und die zweite Rotorpermanentmagnetanordnungshälfte beabstandet zueinander angeordnet sind. Bei einem symmetrischen Aufbau unter Verwendung jeweils eines Rotorpermanentmagneten je Rotorpermanentmagnetanordnungshälfte ist erfindungsgemäß vorgesehen, dass der erste Rotorpermanentmagnet und der zweite Rotorpermanentmagnet in dem Zwischenbereich beabstandet zueinander angeordnet sind.

Einen besonders vorteilhaften Verlauf der Flussfeldverteilung in dem Luftspalt kann dadurch erreicht werden, dass die Querschnittsfläche einer ersten Rotorpermanentmagnetanordnungshälfte und die Querschnittsfläche einer zweiten Rotorpermanentmagnetanordnungshälfte C-förmig ausgestaltet sind. Durch eine C-förmige Ausgestaltung des Querschnitts und daher auch einem C-förmigen Verlauf der Rotorpermanentmagnetaußenflächen kann besonders einfach ein sinusförmiger Verlauf der Flussfeldverteilung in dem Luftspalt erzeugt werden.

Bei den hier betrachteten Querschnittsflächen der Rotorpermanentmagnete, Rotorpermanentmagnetanordnungen und Rotorpermanentmagnetanordnungshälften handelt es sich jeweils um Querschnittsflächen in einer Schnittebene, wobei die Rotorachse des Rotors senkrecht zu der Schnittebene ist.

Es ist besonders vorteilhafterweise vorgesehen, dass jede Rotorpermanentmagnetanordnung einen sinusförmigen Flussverlauf in einem Luftspalt zwischen dem Rotor und dem Stator erzeugt.

Weitere vorteilhafte Ausgestaltungen der erfindungsgemäßen elektrischen Maschine werden anhand von in der Zeichnung dargestellten Ausführungsbeispielen näher erläutert.

Es zeigt:
Fig. 1 eine schematisch dargestellte Schnittansicht einer elektrischen Maschine mit supraleitenden Statorwicklungen und supraleitenden Rotorpermanentmagnetanordnungen und
Fig. 2 eine ausschnittsweise schematisch dargestellte Schnittansicht eines Rotors und eines Stators mit C-förmigen Rotorpermanentmagneten.

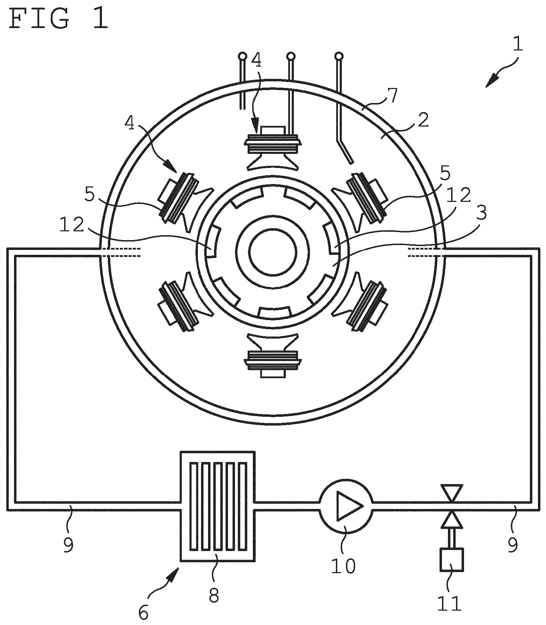

Fig. 1 zeigt eine schematische Darstellung einer elektrischen Maschine 1 mit einem Stator 2 und einem Rotor **3.** Der Stator 2 weist mehrere Statorspulen 4 auf, die Wicklungen 5 aus einem supraleitenden Material aufweisen. Die Statorspulen 4 sind mit einer Kühleinrichtung 6 verbunden, durch die die Statorwicklungen 5 bis zu einer Sprungtemperatur des supraleitenden Materials abgekühlt werden können.

Der Stator 2 und der Rotor 3 sind in einem gemeinsamen Kryostaten 7 angeordnet. Der Kryostat 7 ist mit einem Kryokühler 8 über Rohrleitungen 9 verbunden. Ein kryogenes Fluid wird innerhalb dieses von dem Kryostaten 7, dem Kryokühler 8, den Rohrleitungen 9, einer Kühlmittelpumpe 10 und einer Regeleinrichtung 11 gebildeten Kühlkreislauf mit Hilfe der Kühlmittelpumpe 10 innerhalb des Kühlkreislaufs umgewälzt. Mit der Regeleinrichtung 11 wird die Kühlmitteldurchflussmenge gesteuert. Der Kryokühler 8, die Kühlmittelpumpe 10 und die Regeleinrichtung 11 bilden die Kühleinrichtung 6.

An dem Rotor 3 sind supraleitende Rotorpermanentmagnetanordnungen 12 angeordnet, die ebenfalls mit der Kühleinrichtung 6 verbunden sind, um nicht dargestellte supraleitende Rotorpermanentmagnete der Rotorpermanentmagnetanordnungen 12 bis zur Sprungtemperatur des supraleitenden Materials herab zu kühlen, aus dem die supraleitenden Rotorpermanentmagnete hergestellt sind.

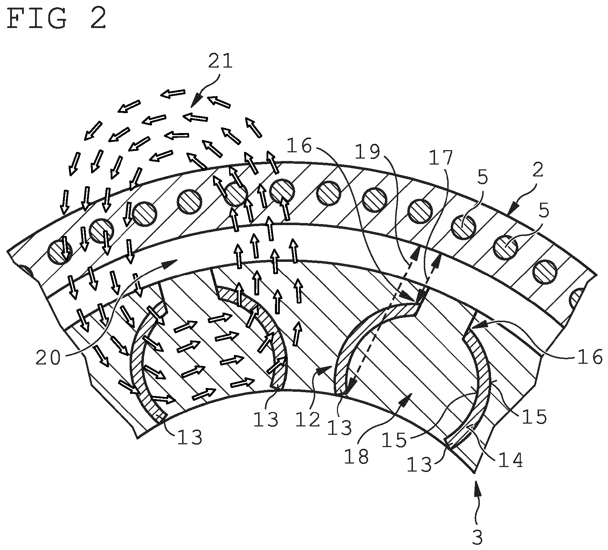

Fig. 2 zeigt ausschnittsweise eine schematische Darstellung eines Rotors 3 und eines Stators 2. Der Rotor 3 weist achssymmetrisch aufgebaute Rotorpermanentmagnetanordnungen 12 mit jeweils zwei Rotorpermanentmagneten 13 auf. Querschnittsflächen 14 der Rotorpermanentmagneten 13 sind bandförmig und C-förmig und Rotorpermanentmagnetaußenflächen 15 der Rotorpermanentmagneten 13 sind C-förmig ausgestaltet, so dass eine jeweils durch die Rotorpermanentmagnetaußenflächen 15 der Rotorpermanentmagneten 12 gebildete Außenseite der Rotorpermanentmagnetanordnungen 13 eine sich stetig ändernde Krümmung aufweisen. Ein von den jeweiligen Rotorpermanentmagneten 13 erzeugter magnetischer Fluss durchtritt die Rotorpermanentmagnetaußenflächen 15 der Rotorpermanentmagneten 13 jeweils in Normalenrichtung.

Beabstandet zueinander angeordnete Endbereiche 16 der Rotorpermanentmagnetanordnungen 12 weisen einen ersten Abstand 17 zu dem Stator 2 auf und ein zwischen den beiden Endbereichen 16 angeordneter Zwischenbereich 18 weist einen zweiten Abstand 19 zu dem Stator 2 auf. In dem Zeichenbereich 18 sind die beiden Rotorpermanentmagnete 13 beabstandet zueinander angeordnet.

In dem Verlauf von jeweils einem der Endbereiche 16 zu dem Zwischenbereich 18 weisen die Rotorpermanentmagnetanordnungen 12 jeweils unterschiedliche Abstände zu einem Luftspalt 20 zwischen dem Rotor 3 und dem Stator 2 auf, wobei die dem Luftspalt 20 zugewandten Rotorpermanentmagnetaußenflächen 15 der Rotorpermanentmagneten 13 einen stetigen Verlauf aufweisen.

Durch den so gebildeten schrägen Verlauf der Rotorpermanentmagnetanordnungen 12 kann das von den Rotorpermanentmagneten 13 bereitgestellte und aus den dem Luftspalt 20 zugewandten Rotorpermanentmagnetaußenflächen 15 der Rotorpermanentmagneten 13 austretende magnetische und durch Pfeile schematisch angedeutete Feld 21 in dem Luftspalt 20 auf einen kleinen Bereich konzentriert werden, so dass die Flussdichte in dem Luftspalt 20 weiter erhöht werden kann.

In der Zeichnung sind zur Veranschaulichung jeweils nur einzelne mehrerer gleichartiger Elemente mit einem zugeordneten Bezugszeichen versehen.

## Patentansprüche

1. Elektrische Maschine (1) mit einem permanenterregten Rotor (3) und einem koaxial zu dem Rotor (3) ausgerichteten Stator (2) die so zueinander angeordnet sind, dass sie eine Radialflussmaschine bilden, wobei der Stator (2) Statorspulen (4) aufweist, die Wicklungen (5) aus einem supraleitenden Material aufweisen, wobei der Rotor (3) mehrere längs eines Rotorumfangs benachbart zueinander angeordnete supraleitende Rotorpermanentmagnete (13) aufweist, wobei die supraleitenden Rotorpermanentmagnete (13) aus einem Supraleiter mit starken Haftzentren gebildet sind, die ein auf den Supraleiter wirkendes äußeres Magnetfeld speichern, solange die Sprungtemperatur des Supraleiters nicht überschritten wird und ein Magnetfeld auch dann aufrecht erhalten, wenn das äußere Magnetfeld entfernt bzw. abgeschaltet wurde, wobei die Rotorpermanentmagnete (13) mit einer Kühleinrichtung (6) der elektrischen Maschine (1) in Wirkverbindung stehen, durch die die Rotorpermanentmagnete (13) unter eine Sprungtemperatur abkühlbar sind, wobei jeweils zwei Rotorpermanentmagnete (13) eine Rotorpermanentmagnetanordnung (12) bilden, wobei jede Rotorpermanentmagnetanordnung (12) einen in Richtung des Stators (2) ausgerichteten Rotorpol bildet, und wobei Rotorpole benachbart angeordneter Rotorpermanentmagnetanordnungen (12) jeweils einen magnetischen Dipol bilden, **dadurch gekennzeichnet, dass** eine Querschnittsfläche (14) der Rotorpermanentmagnetanordnung (12) senkrecht zu einer Rotorachse des Rotors (3) bandförmig ausgestaltet ist, dass ein erster Rotorpermanentmagnet (13) der Rotorpermanentmagnetanordnung (12) von einem Zwischenbereich (18) aus zu einem ersten Endbereich verläuft, dass ein zweiter Rotorpermanentmagnet (13) der Rotorpermanentmagnetanordnung (12) von dem Zwischenbereich (18) aus zu einem zweiten Endbereich verläuft, dass die Endbereiche (16) durch radiale Enden der Rotorpermanentmagnete (13) proximal zum Stator (2) gebildet sind, und dass zwei beabstandet zueinander angeordnete Endbereiche (16) der Rotorpermanentmagnetanordnung (12) einen ersten Abstand (17) zu dem Stator (2) aufweisen und der zwischen den beiden Endbereichen (16) angeordneter Zwischenbereich (18) einen zweiten Abstand (19) zu dem Stator (2) aufweist, sodass die Endbereiche (16) der Rotorpermanentmagnetanordnung (12) näher zu einem Luftspalt zwischen dem Rotor (3) und dem Stator (2) angeordnet sind als der Zwischenbereich (18).

2. Elektrische Maschine (1) gemäß Anspruch 1, **dadurch gekennzeichnet, dass** die Rotorpermanentanordnungen (12) jeweils achssymmetrisch aufgebaut sind.

3. Elektrische Maschine (1) gemäß einem der voranstehenden Ansprüche, **dadurch gekennzeichnet, dass** ein von dem jeweiligen Rotorpermanentmagneten (13) erzeugter magnetischer Fluss Rotorpermanentmagnetaußenflächen (15) des Rotorpermanentmagneten (13) in einer Normalenrichtung der Rotorpermanentmagnetaußenflächen (15) durchtritt.

4. Elektrische Maschine (1) gemäß einem der voranstehenden Ansprüche, **dadurch gekennzeichnet, dass** Tangenten in mindestens zwei Punkten einer zwischen einem der Endbereiche (16) und dem Zwischenbereich (18) verlaufenden Außenseite des Querschnitts der Rotorpermanentmagnetanordnungen (12) unterschiedliche Steigungen aufweisen.

5. Elektrische Maschine (1) gemäß Anspruch 4, **dadurch gekennzeichnet, dass** die Außenseite eine sich stetig ändernde Krümmung aufweist.

6. Elektrische Maschine (1) gemäß einem der voranstehenden Ansprüche, **dadurch gekennzeichnet, dass** in dem Zwischenbereich (18) angeordnete Rotorpermanentmagnete (13) oder Rotorpermanentmagnetabschnitte beabstandet zueinander angeordnet sind.

7. Elektrische Maschine (1) gemäß einem der voranstehenden Ansprüche, **dadurch gekennzeichnet, dass** eine Querschnittsfläche (14) einer ersten Rotorpermanentmagnetanordnungshälfte und eine Querschnittsfläche (14) einer zweiten Rotorpermanentmagnetanordnungshälfte C-förmig ausgestaltet sind.

8. Elektrische Maschine (1) gemäß Anspruch 7, **dadurch gekennzeichnet, dass** jede Rotorpermanentmagnetanordnung (12) einen sinusförmigen Flussverlauf in einem Luftspalt zwischen dem Rotor (3) und dem Stator (2) erzeugt.

## Claims

1. Electrical machine (1) comprising a permanently excited rotor (3) and a stator (2) aligned coaxially with the rotor (3), which are arranged relative to one another such that they form a radial-flux machine, wherein the stator (2) comprises stator coils (4) having windings (5) made of a superconducting material, wherein the rotor (3) comprises a plurality of superconducting rotor permanent magnets (13) arranged adjacent to one another along a circumference of the rotor, wherein the superconducting rotor permanent magnets (13) are formed from a superconductor having strong pinning centres which store an external magnetic field acting on the superconductor as long as the transition temperature of the superconductor is not exceeded and maintain a magnetic field even when the external magnetic field has been removed or switched off, wherein the rotor permanent magnets (13) are operatively connected to a cooling device (6) of the electrical machine (1), by means of which the rotor permanent magnets (13) can be cooled below a transition temperature, wherein two rotor permanent magnets (13) in each case form a rotor permanent magnet arrangement (12), wherein each rotor permanent magnet arrangement (12) forms a rotor pole oriented towards the stator (2), and wherein rotor poles of adjacently arranged rotor permanent magnet arrangements (12) each form a magnetic dipole, **characterised in that** a cross-sectional area (14) of the rotor permanent magnet arrangement (12), perpendicular to a rotor axis of the rotor (3), is band-shaped, **in that** a first rotor permanent magnet (13) of the rotor permanent magnet arrangement (12) extends from an intermediate region (18) to a first end region, **in that** a second rotor permanent magnet (13) of the rotor permanent magnet arrangement (12) extends from the intermediate region (18) to a second end region, **in that** the end regions (16) are formed by radial ends of the rotor permanent magnets (13) proximal to the stator (2), and **in that** two end regions (16) of the rotor permanent magnet arrangement (12), arranged at a distance from one another, have a first distance (17) from the stator (2), and the intermediate region (18), arranged between the two end regions (16), has a second distance (19) from the stator (2), such that the end regions (16) of the rotor permanent magnet arrangement (12) are arranged closer to an air gap between the rotor (3) and the stator (2) than the intermediate region (18).

2. Electrical machine (1) according to claim 1, **characterised in that** the rotor permanent magnet arrangements (12) are each of axisymmetric construction.

3. Electrical machine (1) according to one of the preceding claims, **characterised in that** a magnetic flux generated by the respective rotor permanent magnet (13) passes through rotor permanent magnet outer surfaces (15) of the rotor permanent magnet (13) in a direction normal to the rotor permanent magnet outer surfaces (15).

4. Electrical machine (1) according to one of the preceding claims, **characterised in that** tangents at at least two points of an outer side of the cross-section of the rotor permanent magnet arrangements (12), the outer side extending between one of the end regions (16) and the intermediate region (18), have different slopes.

5. Electrical machine (1) according to claim 4, **characterised in that** the outer side has a continuously varying curvature.

6. Electrical machine (1) according to one of the preceding claims, **characterised in that** rotor permanent magnets (13) or rotor permanent magnet portions arranged in the intermediate region (18) are arranged at a distance from one another.

7. Electrical machine (1) according to one of the preceding claims, **characterised in that** a cross-sectional area (14) of a first half of a rotor permanent magnet arrangement and a cross-sectional area (14) of a second half of a rotor permanent magnet arrangement are C-shaped.

8. Electrical machine (1) according to claim 7, **characterised in that** each rotor permanent magnet arrangement (12) generates a sinusoidal flux distribution in an air gap between the rotor (3) and the stator (2).

## Revendications

1. Machine électrique (1) comprenant un rotor (3) à excitation permanente et un stator (2) aligné coaxialement par rapport au rotor (3), lesquels sont disposés l'un par rapport à l'autre de telle sorte qu'ils forment une machine à flux radial, le stator (2) comportant des bobines de stator (4) qui comportent des enroulements (5) constitués d'un matériau supraconducteur, le rotor (3) comportant plusieurs aimants permanents de rotor supraconducteurs (13) disposés de manière adjacente les uns aux autres le long d'une circonférence du rotor, les aimants permanents de rotor supraconducteurs (13) étant formés à partir d'un supraconducteur comportant de forts centres d'ancrage qui emmagasinent un champ magnétique extérieur agissant sur le supraconducteur tant que la température de transition du supraconducteur n'est pas dépassée et maintiennent un champ magnétique même lorsque le champ magnétique extérieur a été retiré ou coupé, les aimants permanents de rotor (13) étant en liaison fonctionnelle avec un dispositif de refroidissement (6) de la machine électrique (1), au moyen duquel les aimants permanents de rotor (13) peuvent être refroidis au-dessous d'une température de transition, deux aimants permanents de rotor (13) formant dans chaque cas un agencement d'aimants permanents de rotor (12), chaque agencement d'aimants permanents de rotor (12) formant un pôle de rotor orienté en direction du stator (2), et les pôles de rotor d'agencements d'aimants permanents de rotor (12) disposés de manière adjacente formant chacun un dipôle magnétique, **caractérisée en ce qu'**une surface de section transversale (14) de l'agencement d'aimants permanents de rotor (12), perpendiculaire à un axe de rotor du rotor (3), est configurée en forme de bande, **en ce qu'**un premier aimant permanent de rotor (13) de l'agencement d'aimants permanents de rotor (12) s'étend d'une zone intermédiaire (18) vers une première zone d'extrémité, **en ce qu'**un second aimant permanent de rotor (13) de l'agencement d'aimants permanents de rotor (12) s'étend de la zone intermédiaire (18) vers une seconde zone d'extrémité, **en ce que** les zones d'extrémité (16) sont formées par des extrémités radiales des aimants permanents de rotor (13) proximales au stator (2), et **en ce que** deux zones d'extrémité (16) de l'agencement d'aimants permanents de rotor (12), disposées à distance l'une de l'autre, présentent une première distance (17) par rapport au stator (2), et la zone intermédiaire (18), disposée entre les deux zones d'extrémité (16), présente une seconde distance (19) par rapport au stator (2), de sorte que les zones d'extrémité (16) de l'agencement d'aimants permanents de rotor (12) sont disposées plus près d'un entrefer entre le rotor (3) et le stator (2) que la zone intermédiaire (18).

2. Machine électrique (1) selon la revendication 1, **caractérisée en ce que** les agencements d'aimants permanents de rotor (12) présentent chacun une structure axisymétrique.

3. Machine électrique (1) selon l'une des revendications précédentes, **caractérisée en ce qu'**un flux magnétique généré par l'aimant permanent de rotor respectif (13) traverse des surfaces extérieures d'aimant permanent de rotor (15) de l'aimant permanent de rotor (13) dans une direction normale aux surfaces extérieures d'aimant permanent de rotor (15).

4. Machine électrique (1) selon l'une des revendications précédentes, **caractérisée en ce que** des tangentes en au moins deux points d'un côté extérieur de la section transversale des agencements d'aimants permanents de rotor (12), le côté extérieur s'étendant entre l'une des zones d'extrémité (16) et la zone intermédiaire (18), présentent des pentes différentes.

5. Machine électrique (1) selon la revendication 4, **caractérisée en ce que** le côté extérieur présente une courbure variant continûment.

6. Machine électrique (1) selon l'une des revendications précédentes, **caractérisée en ce que** des aimants permanents de rotor (13) ou des portions d'aimants permanents de rotor disposés dans la zone intermédiaire (18) sont disposés à distance les uns des autres.

7. Machine électrique (1) selon l'une des revendications précédentes, **caractérisée en ce qu'**une surface de section transversale (14) d'une première moitié d'un agencement d'aimants permanents de rotor et une surface de section transversale (14) d'une seconde moitié d'un agencement d'aimants permanents de rotor sont configurées en forme de C.

8. Machine électrique (1) selon la revendication 7, **caractérisée en ce que** chaque agencement d'aimants permanents de rotor (12) génère une répartition sinusoïdale du flux dans un entrefer entre le rotor (3) et le stator (2).
